Europäisches Patentamt

European Patent Office

Office européen des brevets

(11) Publication number: 0 159 088
A1

# EUROPEAN PATENT APPLICATION

(21) Application number: 85200543.8

(22) Date of filing: 09.04.85

(51) Int. Cl.⁴: B 60 J 7/10

(30) Priority: 17.04.84 IT 5327784 U

(43) Date of publication of application:
23.10.85 Bulletin 85/43

(84) Designated Contracting States:
DE FR GB IT SE

(71) Applicant: S.I.R.P. STUDI INDUSTRIALI REALIZZAZIONE
PROTOTIPI S.p.A.
Via A.Grandi 11
I-10024 Moncalieri (Torino)(IT)

(72) Inventor: Sala, Silvio
Viale Certosa, 94
I-20156 Milano(IT)

(74) Representative: Lotti, Giorgio
c/o Ing. Barzanò & Zanardo Milano S.p.A. Via Cernaia 20
I-10122 Torino(IT)

(54) Device for removable fixing in a continuous relationship a hood onto a vehicle.

(57) A device for removably fixing in a continuos relationship a hood onto a vehicle is formed by a seat of substantially G-shaped cross-section, formed along the rear and/or side edge of the body in face of which the hood is disposed when being applied onto the vehicle, and by a flexible element formed along the perimetral rear and/or side edge of the hood, whose cross-section is larger than that of the opening allowing the access to said body seat into which the flexible element is extractable pressed by hand; in this way, a removable continuous fixing of the hood onto the body is obtained along the entire side and rear perimeter thereof, maintaining the conventional structure of its front portion, and in addition, the removable continuous fixing of the hood is obtained by a simple pressure of its perimetral edges configured in a special manner for allowing to be coupled, in a separable manner, to corresponding configurations of the body, so as to render extremely easy the fixing and the removal of the hood.

Fig. 1

0159088

## DESCRIPTION

The invention relates to a device for removably fixing in a continuous manner three sides of a hood onto a vehicle.

Usually, the conventional hood is of the type which is stretched to form the roof of the vehicle and anchored to the upper structure of the windshield, by means of a hooking device which stretches it.

In this known technical solution, the hoods provide their seal along the perimetral edges, against inner and outer projections of the body or by means of structures forming part of the hood itself.

It is an object of the invention to provide a type of a removable continuous fixing of the hood to the body, along its entire side and rear perimeter, keeping the conventional configuration of its front portion.

Another object of the invention is to allow carrying out the removable continuous fixing of the hood by a simple pressure of its perimetral edges configured in a special manner for being coupled, in a separable fashion, to corresponding configurations of the body, so as to render extremely easy the fixing and the removal of the hood.

For these and further objects, which will be better ubderstood from the following description, the invention provides a device for the removable continuous fixing of hoods on vehicles, characterized in being formed by a seat of substantially G-shaped cross-section, formed along the rear and/or side edge of the body in face of which the hood is disposed when being applied on the vehicle, and by a flexible element formed along the perimetral rear and/or side edge of the hood, having a cross-section larger than that of the opening forming the access to said seat of the body into which the flexible element is extractably pressed by hand.

The device according to the invention will now be described with reference to the annexed drawings, in which:

Figure 1 is a view, given by way of example, illustrating the way of manually installing a hood by means of the removable continuous fixing according to the invention,

Figure 2 is a cross-sectional view along the line II-II of Fig. 1.

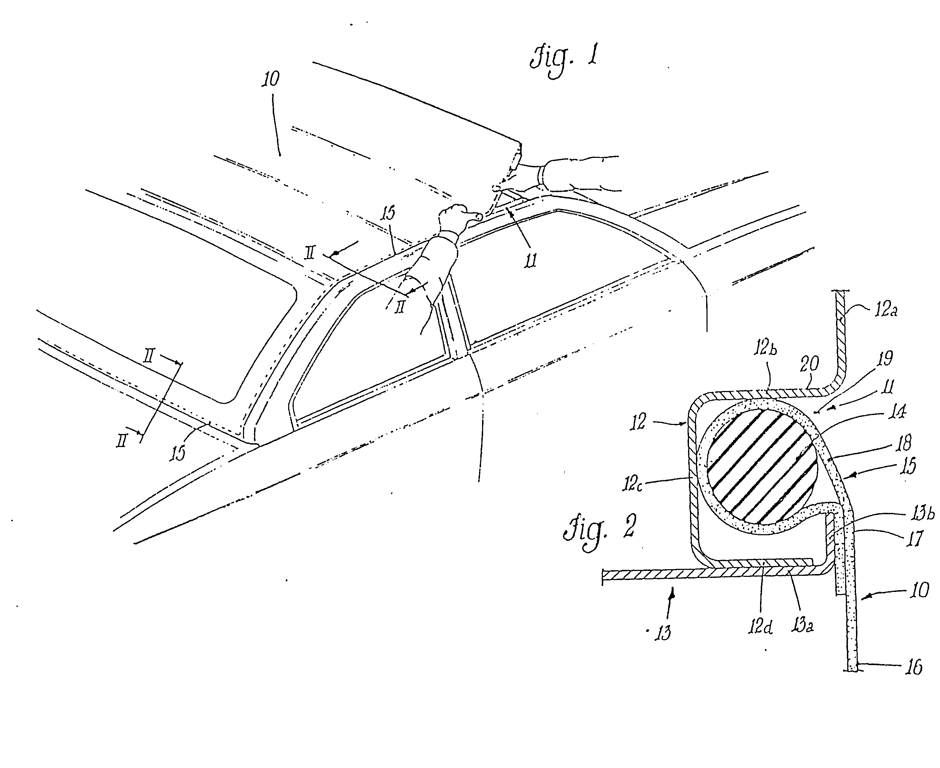

The section of the body along which the hood 10 is fixed in accordance with the invention identifies a G-shaped seat 11 obtained by joining two elements forming part of the structure of the vehicle (Fig. 2).

The element 12, formed by an outer portion 12a and by bent orthogonal branches 12b, 12c and 12d, is joined to the element 13 formed by orthogonal branches 13a and 13b. Along the branches 12d and 13a the connection between the two elements 12 and 13 is provided.

Thus, as can be seen still in Fig. 2, the G-shaped seat 11 is identified by the branches 12b, 12c and 12d of the element 12 and by the branch 13b of the element 13.

The hood 10 is provided, along its perimetral side and rear edges, with a flexible element 14, for example a solid pipe made of rubber, contained in a sewn flap 15, tubular in shape, of the edge of the hood sheet.

On installing the hood (see Fig. 1), its perimetral edge comprising the flexible element 14, is progressively pressed into the G-shaped seat 11 by compulsorily passing the access bottleneck formed between the branches 12a and 13b and whose width is smaller than the diameter of flexible element 14.

Only a manual action will permit the extraction of the element 14 from the G-shaped seat 11 when the removal of the hood is required; in fact, during the forward movement, the aerodynamic action stretches the sheet of hood 10, thus aiding in the provision of an optimum seal of the element 14 within the seat 11, without, however, that the element 14 may come out from the seat itself.

The branch 13b of the element 13, besides acting to partially obstruct the G-shaped est 11, thereby locking in it the element 14, allows also to register the outer thread 16 of the sheet of the hood 10.

- 3 -                    0159088

Furthermore, it is to be noted that the portion 20 of the branch 12b, which is external with respect to the contact point with the flap 15, and the section 18 of the flap 15 itself, which extends between the said contact point and the seam 17, provide a channel 19 which serves as a passage and a discharge of the water, thus eliminating the use of the gaskets usually provided for this purpose.

Figure 1 shows a hood 10 fixed not only laterally, but also rearwardly, by means of the fixing method described hereinabove, and consequently removable in its integrality after having been bent, but it is understood that the fixing device according to the invention may also extend only along the side edges, while rearwardly the hood may be steadily fixed to the body, so as to be simply bent on this latter, and not removed completely.

CLAIMS

1.- A device for the removable continuous fixing of hoods onto vehicles, characterized in being formed by a seat of substantially G-shaped cross-section, formed along the rear and/or side edges of the body in face of which the hood is disposed when being applied onto the vehicle, and by a flexible element formed along the perimetral rear and/or side edge of the hood, having a cross-section larger than that of the opening forming the access to said seat of the body into which the flexible element is extractably pressed by hand.

2.- A device as claimed in Claim 1, characterized in that the seat is formed by two elements of the body, one of which is bent to a G-shaped configuration and the other to a L-shaped configuration, and joined to one another along a common side.

3.- A device as claimed in Claim 1, characterized in that the flexible element has a circular cross-section and is inserted into the turned over end edge of the hood.

4.- A device as claimed in Claim 1, characterized in that between a wall of the G-shaped seat and a section of the flexible element a water passage and discharge channel is formed.

5.- A device as claimed in Claim 3, characterized in that the flexible element is a solid rubber pipe.

6.- A device as claimed in Claim 1, characterized in that the dimensions of the inner space of the seat are larger than the flexible element.

09.04.85

**Fig. 1**

10
11
II
15
II
II
II
15

**Fig. 2**

12a
19
11
14
18
15
13b
17
10
16
20
12b
13a
12d
12
12c
13

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-1 126 267 (REGENSBURGER) <br> * Page 2, right-hand column, lines 30-54; figure 7 * | 1 | B 60 J 7/10 |
| A | * Page 2, right-hand column, lines 55-58; figures 10,11 * | 3,5 | |
| Y | DE-C- 974 467 (PRESSED STEEL) <br> * Page 3, lines 24-31; figure 9 * | 1 | |
| A | | 2,4 | |
| A | GB-A- 268 282 (ALIN, LIAUTARD) <br> * Page 1, line 73 - page 2, line 8; figures 3,4 * | 1,3,4 | |
| A | US-A-1 802 807 (DAVIS) <br> * Page 1, lines 64-74; figure 4 * | 1,3 | TECHNICAL FIELDS SEARCHED (Int. Cl.4) <br><br> B 60 J 7/00 <br> B 60 R 13/00 |
| A | GB-A-2 089 295 (NISSAN) <br> * Page 2, lines 52-57; figure 2 * | 4 | |

The present search report has been drawn up for all claims

| Place of search | Date of completion of the search | Examiner |
|---|---|---|
| THE HAGUE | 12-06-1985 | OSBORNE J. |